# EUROPEAN PATENT APPLICATION

(11) **EP 2 003 862 A2**
(43) Date of publication of application: **17.12.2008**
(21) Application number: 08152065.2
(22) Date of filing: 28.02.2008
(51) Int. Cl.: H04L 29/12, H04L 29/06

(54) **Access, connectivity and interoperability for devices and services**

(30) Priority: 28.02.2007 US 680479
(71) Applicant: Corporation for National Research Initiatives, Reston VA 20191 (US)
(72) Inventor: Morales, Henry N., Kirkland WA 98034-5214 (US)
(74) Representative: Peterreins, Frank

(57) **Abstract**

Among other things, in a network, a mechanism enables a resource that has a pre-assigned unique identifier and is not otherwise capable itself of being accessible on the network, to maintain a resolution record for the resource in an identifier resolution mechanism of the network where the resolution record associating the identifier with an address or other information useful in enabling the accessibility of the resource on the network through the mechanism.

## Description

This description relates to the automated establishment and maintenance of access, connectivity and interoperability between and among devices in a network environment by allotting unique identifiers to logical elements, processes, services, applications or other resources embedded in, associated with or running on such devices (referred to collectively as "embedded"). The technique described here enables the automatic detection of such resources even where the device in which the resources are embedded changes its location within a network, moves from network to network, or changes its mode of operation. A key aspect of the techniques described here relates to the deployment and use in a network of one or more mechanisms, for example, mechanisms that we call persistent translation gateways ("gateways"), to allot unique identifiers to discrete resources within devices using pre-defined and existing unique identifiers, such as the MAC addresses of mobile devices, or a pre-defined service identifier for a TV service provided using such a device. Such allotted identifiers are made known to and updated in the records of either a local or global resolution service.

It has long been known that computers can be moved from one network interface port to another by manual reconfiguration. In the earliest days of the Internet, a change of IP address for a given computer had to be conveyed to others who wished to continue communicating with it. The Domain Name System (DNS), which was introduced in the mid 1980s, allowed the use of names that were mapped into IP addresses.

Using the DNS, for example, when the IP address of a device changes, users who want to access the device on the network can continue to do so, without even being notified of the change, as long as the changes occur relatively infrequently (say, no more often than once a day). This is accomplished, for example, by manually substituting the new IP address in a resolution record of the Domain Name System (DNS). For some devices, for example, mobile devices such as personal digital assistants (PDAs), the changes associated with the device, such as its location, typically occur much more frequently than every few days.

Efforts have been made to deal with device mobility within the Internet. Protocols have been developed for mobile IP, but these generally require that the computer or device stay connected to the Internet, and that a specified host computer serve as a base station for purpose of managing such changes. Furthermore, the basic low-level protocol used by the computers or devices to connect to the network must generally remain the same through all the address changes. If a device were to move from one network to another, and the addresses were to change from say, IPv4 addresses to IPv6 addresses, network connectivity would likely be lost.

In the context of cellular telephones, accessibility is handled within a given network by automatically reassigning cell towers to maintain communication with a mobile phone as it moves. Each phone's identifier is unique within the cell phone network. A mobile phone, however, cannot receive uninterrupted service from an incompatible network, even if it maintains a low level interface to that network.

The IPv6 protocol (that is, Internet Protocol, version 6) is intended to make available a large set of unique network addresses associated with a multitude of networked resources. Such resources could be end points for other particular resources such as digital objects. The IPv6 protocol addresses issue such as mobility and quality of service ( QoS) within the Internet.

IPv6, however, is not designed to update resources inside of other resources. For example, if the IPv6 network address A of a repository changes, IPv6 does not purport to update the addresses X and Y of documents inside the repository to indicate that they too have moved. IPv6 serves as an efficient networked device identification and routing mechanism for devices within a set of networks that all understand IPv6; however, another means of identification would typically be required (i.e., for efficiency) to allow users to references specific resources that are within each of the devices and can be moved independently. A naming system is therefore required. Two possible naming systems could be considered for this purpose: the DNS and the handle system of Corporation for National Research Initiatives, Reston, VA (www.handle.net)

Changes to the DNS resolution entries require manual intervention, are handled by registrars, and usually take at least a day to submit and have entered into the system. For this reason, the DNS is not appropriate for dynamic location changes such as might arise if a user with a PDA encounters address changes many times a day, or even many changes per hour, which might occur as a mobile user roams from place to place in a given day.

The handle system has inherent benefits, especially in the administration of a digital object identified by a handle in the system, and in the delegation of administrative rights. The handle system also allows the inclusion of encryption and formal credential verification while administrative and resolution tasks are performed. This allows for fine-grained control in the system.

As applied to a given network, the handle system relies on the existing network routing infrastructure to route information to a given resource identified by its handle. For example, in an IPv6 network, the handle system will rely on IPv6 addresses to get to devices on that network and eventually use them as part of resolution paths for embedded resources contained within such devices. Handles may also be used to identify the embedded resources beyond their particular association within networked devices. For example, a handle might uniquely identify a particular piece of information within a specific device, regardless of where the device is located. This feature is especially important for embedded resources that migrate as the device in which they are embedded moves from one IP address to another on the Internet, or from one network to another.

In the context of this description, "device" is defined, for example, as a physical object that contains one or more logical elements, processes, services, applications or other resources that are capable of carrying out computational or other tasks for a user; and, a "user" may be an individual or another device or resource. In some cases, where more specificity is appropriate, we refer to devices or embedded resources. In other cases, we simply refer to devices.

Figure 1 shows a network arrangement consisting of IP networks, non-IP networks, devices, translation gateways, and a resolution system.

Figures 2 though 9 are flowcharts.

We describe here a system that allows the presence of one or more devices on one or more (in some cases incompatible) networks to be continually and automatically detected, and its means of access updated, as the device experiences (even frequent and rapid) changes, so that the accessibility of or interaction by the device with other devices remains essentially uninterrupted even without the other devices knowing or needing to know either that changes have occurred or the present state of the device. The changes of state experienced by the device could be of any kind that would affect the accessibility or interaction, including, for example, changes of location within a given network, moving from network to network, or changes in its mode of operation. By accessible, we mean that, among other things, the devices remain able to receive and/or provide (e.g., continuous uninterrupted) services.

Here we describe a system that provides naming services for devices or resources (we sometimes call them simply embedded resources) that can be actual physical devices or logical elements contained within devices or resources (we sometimes call these latter elements the embedding resources) in a network system consisting of one or more networks. The system enables continuous accessibility to the devices and their embedded resources even when the states of the devices and their embedded resources change frequently.

Using the system described here, for example, if a service (or other resource) that is embedded in a device that has been given an IPv4 address on the Internet, moves to a new IPv6 address, or to a private network that uses a different addressing structure, the system will automatically accommodate the change in address. A device that itself has no direct Internet accessibility, and which does not have the ability to run minimal programs, can be represented on the Internet by a gateway that automatically assigns the device a unique identifier and causes the resolution system to be updated automatically. This capability is used to maintain communication connectivity or other accessibility with the device whether or not its location changes. Devices that have direct Internet connectivity or other accessibility can be assigned unique identifiers without the need for translation gateways.

We describe here a heterogeneous network system (e.g., of one or more networks and devices which may be incompatible in they do not all adhere to a common addressing structure) based on persistently identified abstractions of resources (including devices, embedded resources and other non-directly accessible capabilities) in the system. Such a persistently identified abstraction associates a resource with information about a current state of the resource (e.g., its implementation, location, and other attributes) that is useful or required for network communication or other accessibility with the resource. In some examples of the network system, the abstraction for each of the resources is a digital object that has a unique identifier within a distributed persistent identification system, for example, a system implemented using technologies based on the handle system. The resources in the network system are then able to, for example, communicate and maintain addressing and communications inter-connectivity, even while changes occur at lower levels of the implementation, such as their network and type of network.

For example, a unique identifier is generated for each resource embedded within a device to facilitate communication or other accessibility with the resource independent of the changing state of the device and its embedded resource, e.g., its location, the network to which it is connected, or its mode of operation. The unique identifier for an embedded resource may be pre-assigned when the resource is created, initialized, updated or at any other convenient time, or may be derived automatically from a unique attribute unique of the resource such as a device's MAC address.

An identifier resolution system, such as the handle system, maps each unique identifier into state information about a resource embedded in a device, such as its current network address. When a device moves from one network with connectivity to the Internet to another network with Internet connectivity, the device uses the network to communicate with a translation gateway on that network. In some implementations, the gateway (1) assigns a unique identifier to the resource based on the device's pre-defined MAC address, if a unique identifier has not already been assigned, (2) updates the resolution system with protocol information sufficient for other devices to communicate with the resource, and (3) relays traffic from the device to the Internet by encapsulating it within Internet packets that originate from the translation gateway and for which return traffic can be interpreted correctly to encapsulate it for routing back to the address of the appropriate embedded resource based on the unique identifier.

A resource embedded in a device on the Internet uses a handle monitor to maintain its unique identifier, The monitor has the ability to convey the current network address of the device to the resolution system using the device's unique identifier to denote itself. Each resource that is not on the Internet, but which is embedded in a device on a network that has Internet connectivity, relies on its translation gateway to discover its existence, to obtain its unique identifier from the device's handle monitor, and to update the resolution system using any of several mechanisms, including mobile programs. In this mode, the gateway provides relaying services for the device. The updating mechanism relies on security technology to ensure that updates to the resolution system are only made by an authorized party, typically the device itself, a translation gateway that represents it, or by the user of the updating mechanism.

The handle monitor allots identifiers to resources embedded in devices where a main element of each identifier, known as a prefix, is appended to the resource identifier and entered into the resolution service and is thus globally unique and persistent within a defined service maintained by the gateways. Each resource embedded in a device maintains a valid binding (or other association) between the resource's identifier and its present state (for example, its attributes such as its IP address, administrators, etc.). The bindings are kept current by agents that reside on the devices or on their delegates. These agents make sure that the identifier-to-address mapping is never stale (that is the address associated with the identifier is never outdated), thus keeping the device accessible even after it changes its attachment point or other state. Hence, a device is able to change its state frequently, while remaining accessible using its persistent identifier.

Agents are used to update the system and may be stationary or mobile. Update agents are typically static and bound to a device. Infrastructure agents reside on translation gateways and assist in disseminating and updating information within the system. On the other hand, certain agents are mobile and perform tasks such as logical coordination and routing, thus carrying data and instructions across networks. The coordination of these agents with the persistent identifier system allows for mobility and persistence in communication and accessibility.

The translation gateways enable the functioning of the network infrastructure. Translation gateways prolong and extend the reach of the Internet (that is, the number, scope, and locations of the devices that are effectively part of the Internet) by continuously redefining its boundaries.

For devices with limited resources, translation gateways act as super agents that manage the identifiers for resources embedded in the devices and provide the devices with basic network translation resources. Translation gateways implement an Open Device Access Protocol (ODAP) to discover and associate devices and their embedded resources, with persistent identifiers to enable them to connect to the overall persistent infrastructure. Translation gateways manage the migration of non-persistent traffic to transient persistent networks and vice versa. The agents residing on these translation gateways also perform on-the-fly protocol translations such as DNS-to-Handle as well as application specific implementations.

The translation gateway is able to discover nearby devices as well as their embedded resources to form associations between the resources and the network-independent identifiers that represent them, and to maintain those associations in the resolution system. The translation gateway uses a handle monitor and ODAP as described below.

In some examples, the handle system is used to identify a given resource, e.g., a mobile device using the term "prefix" as the prefix for each identifier. Each device therefore possesses a unique, global, and persistent identifier known as a handle. These identifiers resolve to local addresses depending on the communication medium. For example, the handle "prefix/laptop" for a particular laptop computer that is connected to the Internet, would map into a global IPv6 or IPV4 address based on information in the associated handle record stored in the handle system.

Service handles, which are defined in the handle system, would map into service specific identifiers (e.g., services that might be available from the laptop's operating system). For example, the handle "prefix/UUID" could map into a specific service running on a Bluetooth device and identified by a certain UUID. As another example, the handle "prefix/sipuser" corresponding to a SIP user, could resolve to the actual SIP URL (domain binding) on which that user is reachable. The attributes (or state information) that a handle maps to are dynamically changeable; however, the handle itself is persistent. The handle thus becomes independent of a resource's state, for example, its initial location, performance parameters, or mode of operation.

So, changing a resource's location, for example, will not disconnect the service as long as the new location is updated in the handle record. This raises the issue of updating the handle record according to administrative privileges. One type of stationary agent is the handle monitor (sometimes referred to as IPHM in an IP environment), which is responsible for insuring that the handle bindings do not become stale.

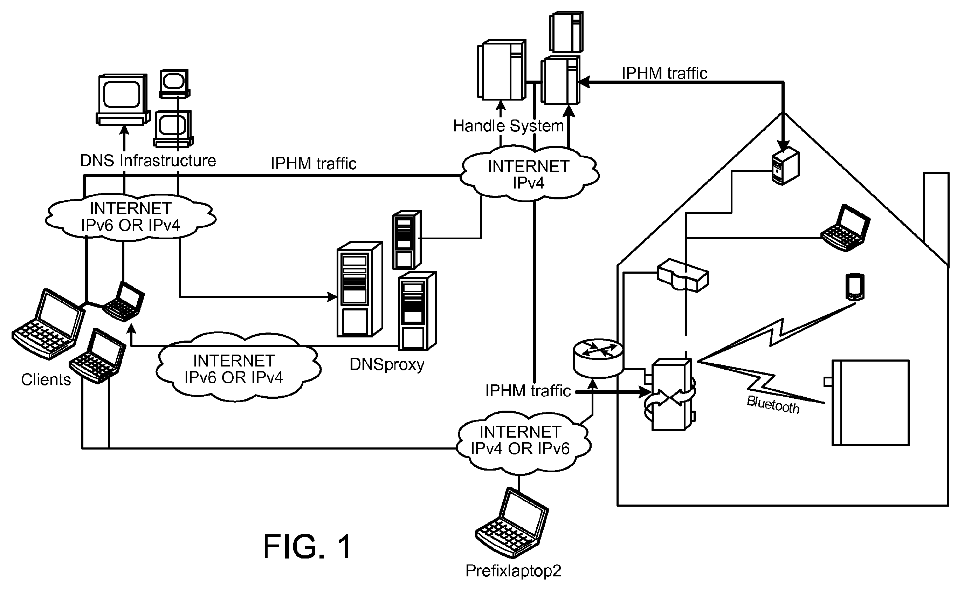

In Figure 1, the resource identified as prefix/laptop1 and prefix/desktop 1 and the translation gateway prefix/bluebox run a handle monitor agent which enables the devices to change their network attachment points while remaining accessible through their handles. The handle monitor is a software component that runs on network devices that have abundant resources (e.g., laptops) or have limited resources (e.g., PDA's) and monitors each device's network attachment point. The handle monitor is provided information about the handles allotted to one or more resources embedded in a device and the certificates needed to administer the handles. In some implementations, the handle monitor detects any change to the device's active IPv6/4 address and uses this information to update the respective attributes for the handle in the handle system.

In connection with IPv4 and IPv6 addresses, the algorithm binds mobile device resource handles to global IPv6 addresses. If no global IPv6 address is detected, the handle is bound to the IPv4 address.

Some implementations of the handle monitor have been written in Java and run on both the Windows and Linux operating systems. A limited J2me implementation of the handle monitor runs on limited resource devices, mainly PDA's (Linux, Windows Mobile 2003). Dual stack (IPv4/IPv6) network connectivity allows resources to be accessed either through a public IPv4 address or preferably a global IPv6 address.

A specific implementation of the gateway mechanism is a Handle DNS service, which resolves handles with the regular DNS protocol and provides a standard "bind interface" to the Handle DNS (HDNS) gateway. It allows legacy Internet applications such as http, ftp, etc to access and request services from the mobile devices identified by handles. These devices may or may not have IP connectivity and may reside on networks that are not part of the Internet. The HDNS gateway exposes handles as valid DNS entries by appending the DNS gateway domain to them and formatting them as regular DNS entries. Upon domain resolution request, the HDNS is able to identify the requests as handle resolution requests and proceed to obtain the device state from its associated handle and respond with its current IPv4 or IPv6 association. In this manner, the requesting clients and legacy applications need not be aware of the use of handles to identify the resources, and, as a result, legacy applications can interoperate with non-legacy resources. This approach is also true in the case of email services.

ODAP is a protocol for the discovery and association of nearby devices and their embedded resources, and the association of such resources with IP addresses and a network independent "global address" that is a globally unique identifier. In one implementation, the protocol runs on a translation gateway and the resources embedded in the devices consist of services. In this context, the protocol operates in "push" and "pull" modes. In the pull system the translation gateway polls the devices around it to discover their presence and embedded services; in the push scenario, the devices make their presence and services known to the translation gateways in their vicinity.

The ODAP protocol has following four basic operations: device discovery, service listing, service implementation, and device handover. IIn some implementations, useful for example in a Bluetooth environment, when the translation gateway receives from a device, a client request for device discovery, the translation gateway starts scanning for Bluetooth devices in the vicinity of the translation gateway. The translation gateway then authenticates each of these discovered devices and associates each device with a handle partly constructed from the device's Bluetooth MAC address.

A separate algorithm is used to compute the handle of a Bluetooth device and verify it globally using a mobile device authentication protocol (MDAP), which is used to authenticate resources discovered by ODAP The authentication algorithm will know a given device (a Bluetooth device, in this case) by its unique handle, because the identifier is derived by the gateway from the device's MAC address. MDAP will also enable a resource that can provide credentials, such as a certificate, to authenticate its allotted handle to prevent impersonation. A valid global IPv6/4 address from the translation gateway's pool of addresses is then associated with the computed handle. The handle is then either updated (i.e., the handle already exists in the handle system indicating that the device was previously registered with some translation gateway) to reflect the new IP address, or it is created (i.e., this is the first time the device has been registered with a translation gateway). At this point, the translation gateway informs the requesting client of the online devices that have been discovered by ODAP. This can be done is any of several ways, but the preferred approach is to provide them as a list of handles associated with the device and its resources.

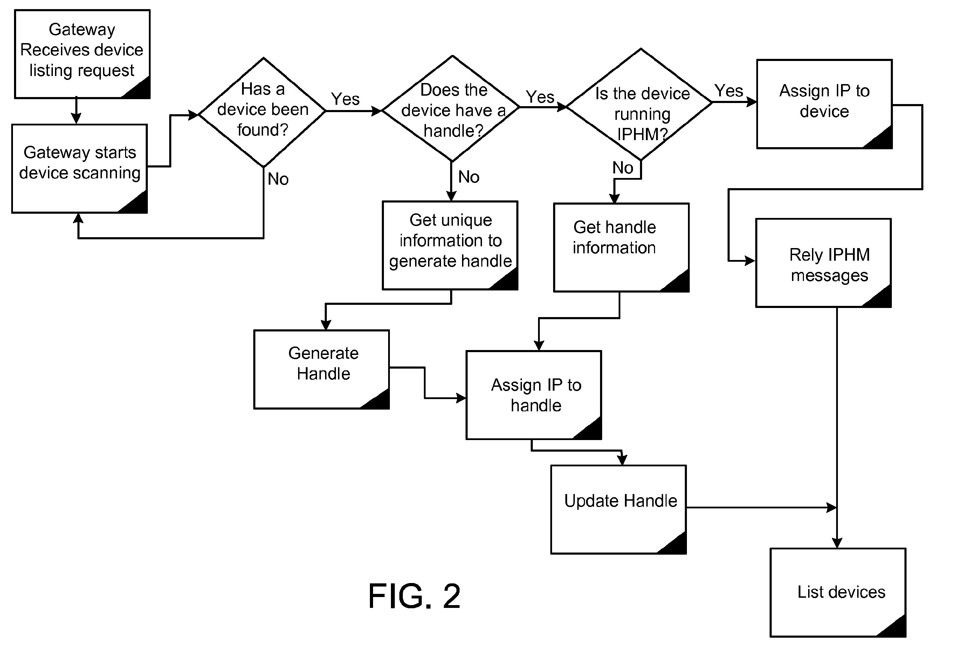

A pull implementation is one in which the gateway seeks to discover devices by actively seeking them out. A push implementation is more passive, in that the devices make their presence known to the gateway, which is in listening mode. The flowcharts in figures 2 through 9 depict the push and pull implementations. In the example below, we assume the gateway is connected to the Internet, but it could just as well be connected to some other global system that provides similar connectivity and functionality. Descriptions of the discovery process for a pull and push implementation are as follows:

### Pull implementation (figure 2)

The translation gateway receives or initiates a device listing request.

The translation gateway initiates a scanning operation to discover devices nearby.

The translation gateway validates and authenticates the discovered devices.

Devices are mapped to their unique identifiers and a check is made whether these identifiers are known to the handle system

If the computed identifiers (e.g., handles) are non-existent, they are created.

A valid IP address, whether IPv4 or IPv6, is associated with each discovered device.

The handle-IP association is updated in the Handle System.

The device is listed as a valid discovered device

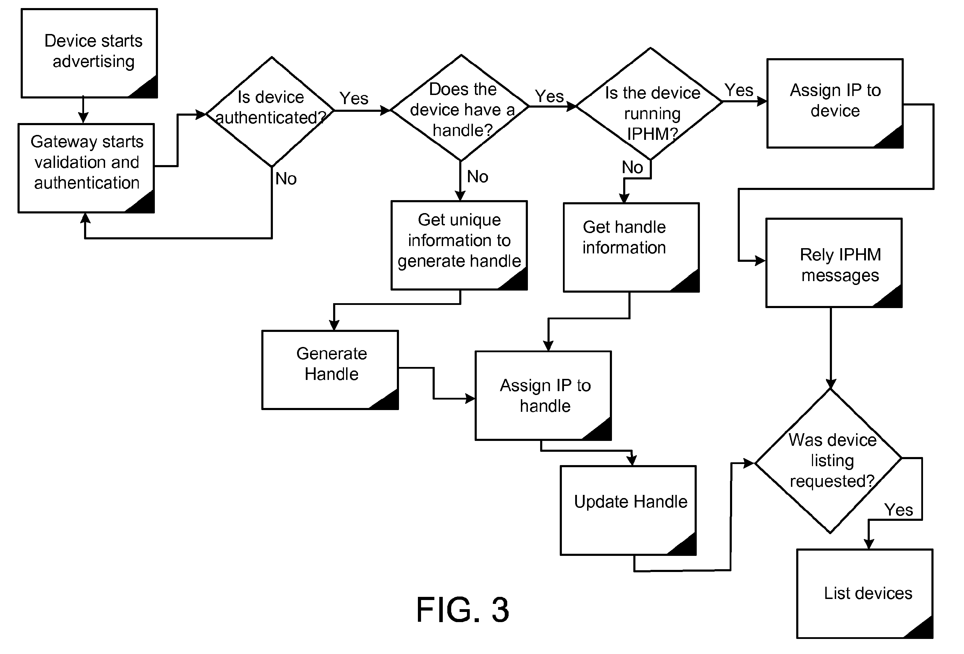

### Push implementation (figure 3)

The device initiates an advertising operation to associate with only a nearby translation gateway.

The device starts validation and authentication with the translation gateway or directly with the handle system through the translation gateway

Each device either provide its own handle or has it computed by the translation gateway

A valid IP address, whether IPv4 or IPv6, is associated with the particular device.

The handle-IP association is updated.

If requested, the device is listed.
Following device discovery, a service listing request is issued by the gateway on behalf of a requesting party for a specific target resource. The translation gateway in turn polls the target device for the services or other resources the target device is advertising. The translation gateway generates the respective handles of these embedded resources by mapping the identifiers for the services or other resources to their handles. The resources for the device are then listed. Examples of implementations for pull and push implementations are:

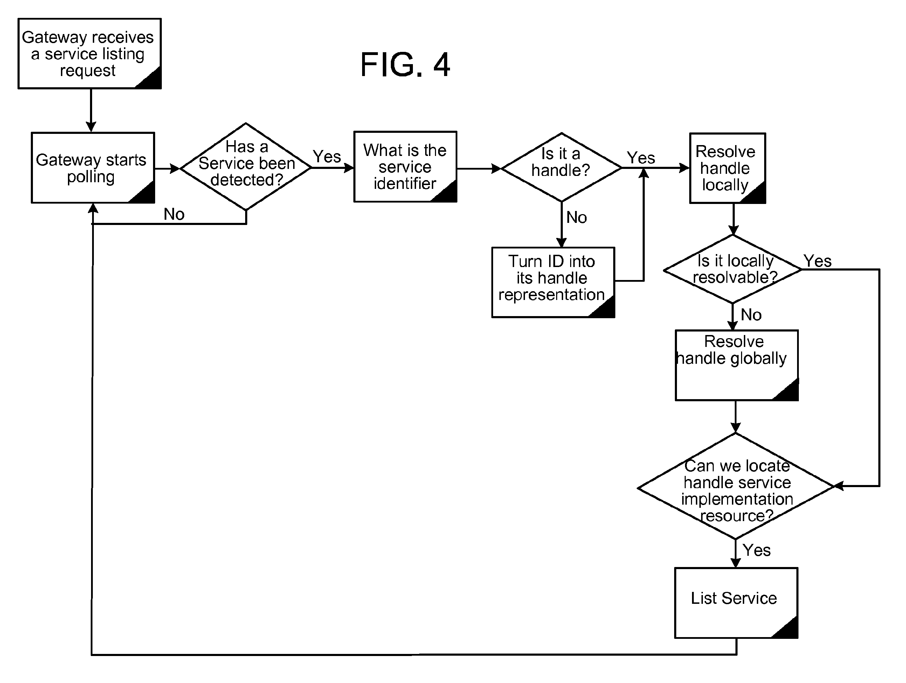

### Pull implementation (figure 4)

The translation gateway receives or initiates a service listing request.

The translation gateway then polls devices for services or other available resources.

The translation gateway maps service or other available resource identifiers to handles and tries to resolve them locally to verify implementation rights.

If no local implementation of the service or other resource is available, the system resolves the service or other resource handle to locate the correct service code implementation, so that it can be installed and accessed on that device.

The service for a particular device is listed.

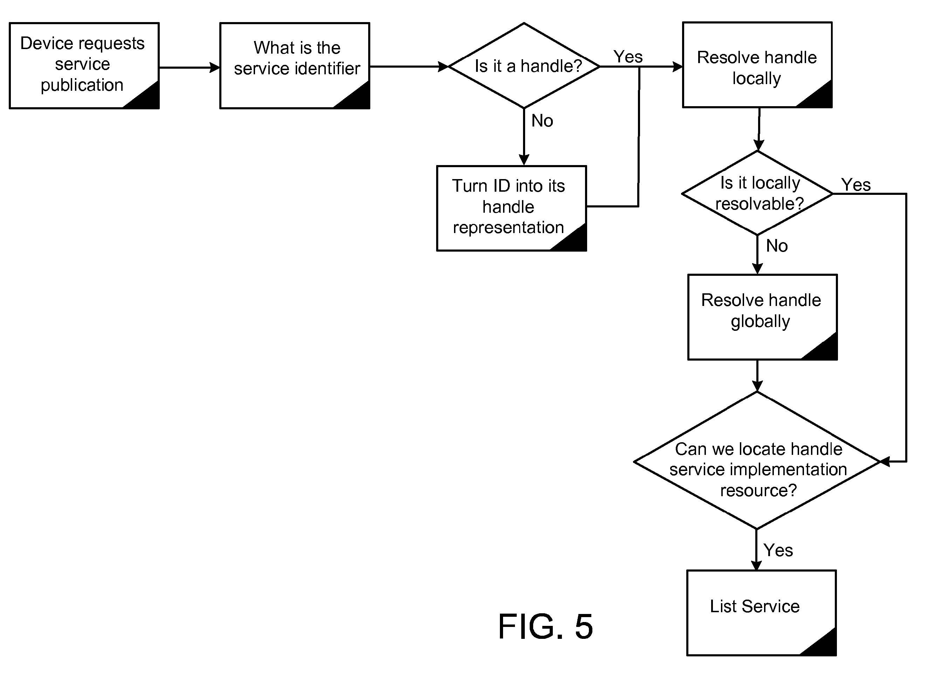

### Push implementation (figure 5)

The device requests service publication through a nearby translation gateway.

The device provides either a service identifier or a service handle.

The translation gateway maps the service or other resource identifier to its handle and tries to resolve them locally to verify implementation rights.

If no local implementation is available, the system resolves the service handle to locate the correct service code implementation, so that it can be run on that device.

The service for a particular device is listed.
If the service implementation is not found locally by the translation gateway, the translation gateway resolves the service handle to locate the code required to implement the service. This last step involves the following sequence of events:
The service handle is used to query a service registry. This query, which is contextualized to the particular characteristics of the translation gateway, is sent to the registry as an actionable request. The service registry points the translation gateway to a specific service provider site containing the actual service implementation descriptor and provider or signed code that fits the translation gateway's needs. This process involves secure implementation of the service which is itself identified by a persistent identifier. The mechanism depicted above for supporting service implementation is referred to as delegated implementation, i.e., it is the translation gateway that implements the service and exposes a high level interface (e.g., web interface) to the client. Service implementation, for example, can be done through encapsulation (e.g., where the client encapsulates Bluetooth commands in IP and the translation gateway decapsulates these commands without implementing the service locally.)

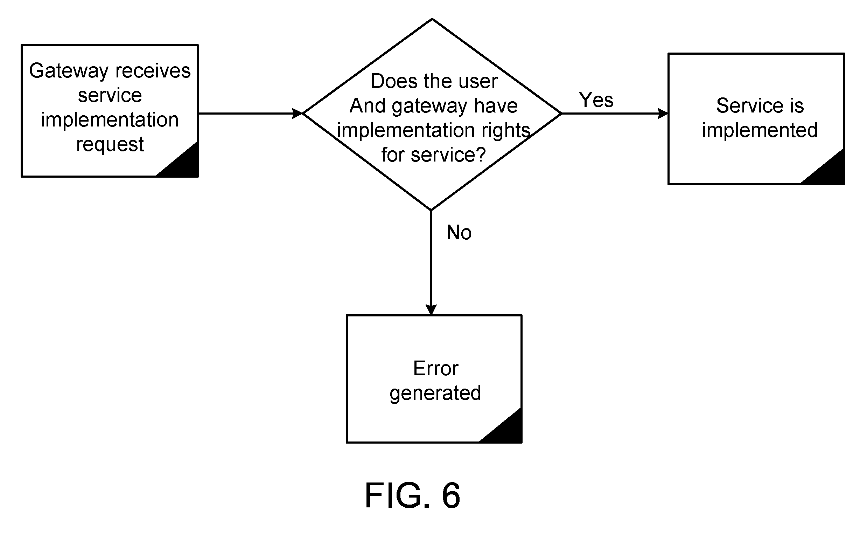

### Pull implementation (figure 6)

The translation gateway receives or initiates a service execution request.

Implementation rights are verified in the handle system.

The service code is resolved and implemented, executed or obtained from a third party owner.

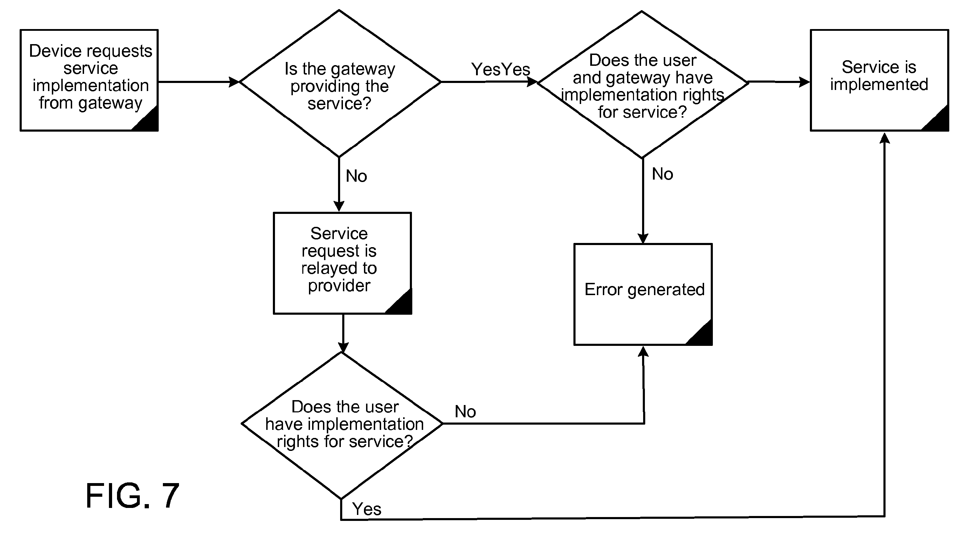

### Push implementation (figure 7)

The translation gateway receives a service execution request.
The translation gateway either verifies implementation rights using the handle system, which enables the service code to be resolved and implemented, executed, or obtained from a third party owner; or the service request is relayed to an internal or external service provider and the service is executed by the authorized provider.
The translation gateway sends keep-alive verification messages to the devices to verify their presence. Upon failure to verify device presence for a defined interval of time, the device IP is cleared and made available again in the translation gateway's pool of available IP addresses.
When a device becomes associated with the translation gateway, the state information in the Handle System is updated and communications automatically restored. All global state, service, and security information generated by the system is automatically updated.

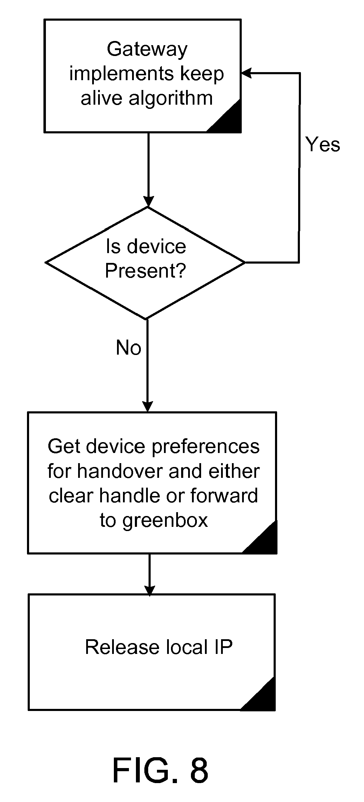

### Pull implementation (figure 8)

The translation gateway implements a keep-alive verification protocol to verify device presence.

Upon failure to verify device presence for a defined period of time, the device IP is either cleared or redirected to another network depending on device preferences obtained from the handle.

The local IP address is released and returned to the pool of available IP addresses.

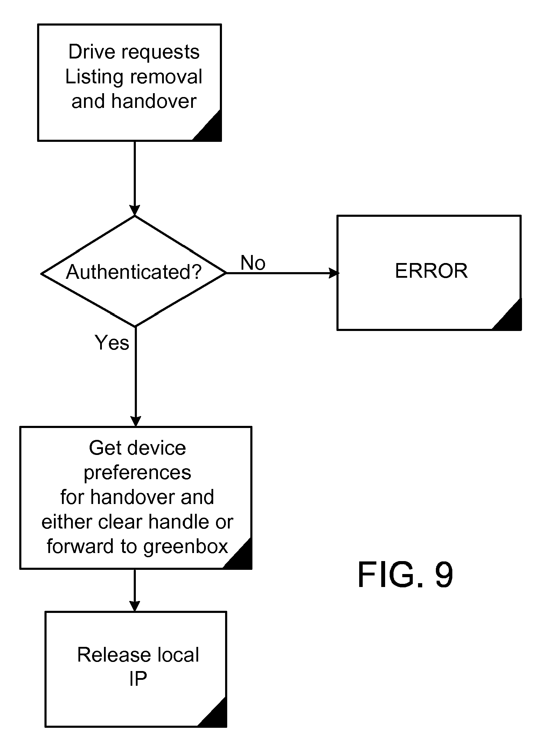

### Push implementation (figure 9)

The device requests listing removal as a preparation for roaming and expresses what kind of redirection is desired.

The Handle System is updated by the translation gateway.

The local IP address is released and returned to the pool of available IP addresses.
The ODAP portion of the translation gateway is expandable to fit additional communication protocols. It also supports MDAP to be used for authentication of devices and resources known to ODAP.
A translation gateway that communicates with either passive or active devices that are not always on is called a red box. The red box can therefore activate and wake up passive RFID devices, or wake up dormant sensor networks for the following purposes:
To obtain basic information used to associate the device's resources with handles and allow third party applications to rely on the handle system to obtain more information or communicate with these devices.
To obtain a defined set of data that the device is willing to provide upon request when it wakes up and communicates with the outside world.
To transmit relevant information addressed to the dormant resource such as control or update information either in real time or according to scheduled transmission timeframes specified by the dormant resource using its handle.

The red box is thus both a communication initiator and a relay agent for communication with passive or active devices with intermittent availability.

A blue box is a translation gateway that interacts only with devices that do not posses a handle monitor or any notion of their association with a particular handle. The blue box communicates with handle monitor porting devices and handle association aware devices and acts as an interlocutor for the handle system. It does so by either relaying handle protocol connections of handle monitor porting devices or effectively building handle protocol communication requests for handle association aware devices such as very simple sensors, robots, or communication devices, such as cell phones, that have some information about the handle that they are associated with when they roam near a blue box. MDAP is used to allow devices that are associated with handles, or may be associated with handles, to authenticate themselves with the blue boxes (and indeed any of the colored boxes) and the Handle System.

When ODAP communication occurs, a set of handle fields are used by the participants to store or retrieve information about the devices involved. This set of fields is independent of the communication protocol being used and allows third party implementers to extend the ODAP capabilities. This set of fields allows scalability (e.g. through the use of the VLIST and TYPES information in the handle system) to include future fields. It also allows ODAP to remain consistent and fluent across extensions and private implementations by allowing recalculation and computation of fields that are used as parameters for communication, authentication, and data retrieval.

ODAP contains an operation logic module that defines three ways of interaction with the blue boxes:
Pure relay functionality in which the blue box only relays traffic from one client device to another.
Transparent service integration in which the blue box appears to clients as the final destination device and provides application layer translation to access other services.
Interlocutor mode in which the blue box is an interlocutor for both the handle system and its clients.

The operation logic module allows ODAP implementers and developers to coexist and interact with each other.

The translation gateway concept of service and application translation through communication bridging and conversion is at the heart of the color boxes. Their core functionality involves a mixture of translation gateway and routing functionality that allows them to route traffic effectively while providing protocol translation, naming resolution, and update services. These boxes implement external and internal sets of communication capabilities such as gigabit Ethernet, Wi-Fi, Cellular/PCS, and Bluetooth. In those interfaces that support IP-based communications, the translation gateway offers dual stack IPv4 and IPv6 functionality. The translation gateway provides for integrated IPv4 and IPv6 capabilities with handle administration and routing services to any IP-based client.

With this functionality the translation gateway behaves like a DHCP server listening for DHCP requests from clients inside private IPv4 based networks. These clients will issue either IPv4 or IPv6 requests. The translation gateway will in turn receive these requests and use them to obtain a handle mapping for each requesting entity. Upon assignment of a particular handle or the discovery of the existence of a prior one, the translation gateway updates the current IP association for that device. This effectively provides an automatic association between the IP address used and the handle for managing devices residing behind the translation gateway. During this request procedure and handle association or discovery, MDAP is used to uniquely and securely identify a requesting node inside a network using an interface device signature algorithm. This algorithm is used to generate a unique signature for a particular device that can be calculated and validated during update.

The translation gateways, when used in conjunction with the handle system, provide a basis for a new model for supporting dynamic communications connectivity and information relaying in the future.

Additional information about certain aspects of the system and techniques described here can be found in J.Khoury, N.Nehme-Antoun and H.N.Jerez, "An Application of the Mobile Transient Internet Architecture to IP Mobility and Inter-Operability," paper submitted to 12th Annual International Conference on Mobile Computing and Networking), archived at http://arxiv.org/ftp/cs/papers/0610/0610087.pdf, which is incorporated in its entirety by reference here.

Other implementations are also within the scope of the following claims.

## Claims

1. A system comprising
in one or more networks, a mechanism configured to automatically generate unique, persistent identifiers for resources embedded in, associated with or running on devices or other computational facilities that are to be accessible on the network and,
to automatically maintain identifier records for these resources in an identifier resolution system, each of the records associating one of the identifiers with a network address or other information useful in enabling network connectivity or other accessibility of the resources on the network..

2. The system of claim 1 in which the mechanism encapsulates and forwards information to and from one or more devices or other computational facilities and the Internet.

3. The system of claim 1 or 2 in which the mechanisms create or obtain identifier information via a monitor capability.

4. The system of claim 3 in which the information obtained is verified.

5. The system of claim 3 or 4 in which one or more mechanisms provide updating information to an identifier resolution system.

6. The system of claim 5 in which the mechanism provides extensible authentication and authorization capabilities to perform the updating function securely.

7. A method for discovering the presence of devices or other computational facilities along with their network addresses whereby network-independent unique identifiers are generated for such computational facility by a mechanism based on local information provided by the facility and where the network address is updated in a resolution system accessible by other such mechanisms.

8. The method of claim 7 in which the method includes a discovery capability for services, processes, applications or other resources embedded in, associated with or running on a computational facility.

9. The method of claim 8 in which access to specific discovered resources is implemented.

10. The method of claim 9 in which authorizations to access such resources are verified.

11. The method of claim 7 in which computational facilities are handed over to other such mechanisms once the facility has moved.

12. The method of claim 8 in which a maintenance protocol is run that enables automatic state and resource update.

13. The method of claim 8 in which the mechanism runs a monitor capability.

14. A system comprising
in a network, a mechanism configured to enable a resource that has a pre-assigned unique identifier and is not otherwise capable itself of being accessible on the network, to maintain a resolution record for the resource in an identifier resolution mechanism of the network where the resolution record associating the identifier with an address or other information useful in enabling the accessibility of the resource on the network through the mechanism.

15. A method comprising
automatically discovering the presence and network addresses of resources on a network,
automatically generating network-independent unique identifiers for the resources based on local information provided by the resources, and
updating the network addresses in an identifier resolution system that is accessible across the network.
